# EUROPEAN PATENT SPECIFICATION

(11) **EP 3 152 418 B1**
(45) Date of publication and mention of the grant of the patent: **30.05.2018**
(21) Application number: 14739501.6
(22) Date of filing: 09.06.2014
(51) Int. Cl.: F01N 3/20, F01N 13/18, F02B 37/013

(54) **BYPASS DEVICE OF AN EXHAUST SYSTEM OF A TURBOCHARGED INTERNAL COMBUSTION ENGINE AND A SYSTEM COMPRISING A BYPASS DEVICE**
BYPASS-VORRICHTUNG EINER ABGASANLAGE EINER AUFGELADENEN BRENNKRAFTMASCHINE UND SYSTEM MIT EINER BYPASS-VORRICHTUNG
DISPOSITIF DE DÉRIVATION D'UN SYSTÈME D'ÉCHAPPEMENT D'UN MOTEUR À COMBUSTION INTERNE TURBOCOMPRESSÉ ET SYSTÈME COMPRENANT UN DISPOSITIF DE DÉRIVATION

(43) Date of publication of application: 12.04.2017
(73) Proprietor: Wärtsilä Finland Oy, 65380 Vaasa (FI)
(72) Inventor: LATTANZIO, Vincenzo, I-34018 Trieste (IT); VARLEZ, Giuliano, I-34018 Trieste (IT)
(74) Representative: Berggren Oy, Helsinki & Oulu
(86) International application number: PCT/FI2014/050465
(87) International publication number: WO 2015/189457

(56) References cited:
- WO-A1-2006/053653
- WO-A2-2012/172169

## Description

The invention concerns exhaust systems of turbocharged internal combustion engines and in particular exhaust systems of two-stage turbocharged internal combustion engines. The present invention relates to a bypass device of an exhaust system of a turbocharged internal combustion engine according to the preamble of the independent bypass device claim and to a system comprising a bypass device according to the preamble of the independent system claim.

In patent application EP2721266 A2 is disclosed a by-pass valve arrangement for an exhaust system of an internal combustion engine, the by-pass valve arrangement comprising ducting having a first inlet, a second inlet, a first outlet and a second outlet, a valve having a first position, in which position fluid flow from the first inlet to the first outlet and from the second inlet to the second outlet is allowed, and fluid flow from the first inlet to the second outlet and from the second inlet to the first outlet is blocked, and a second position, in which position fluid flow from the first inlet to the second outlet and from the second inlet to the first outlet is allowed, and fluid flow from the first inlet to the first outlet and from the second inlet to the second outlet is blocked, the ducting comprising a first duct element connecting the first inlet to the first outlet, and a second duct element connecting the second inlet to the second outlet, in which each of the first duct element and the second duct element comprises a flange for arranging the valve between the first duct element and the second duct element.

In patent application EP0953738A2 is disclosed an exhaust emission control system of an internal combustion engine, comprising: exhaust gas purifying means provided in an exhaust passageway of said internal combustion engine; flow direction switching means including four ports and provided at an exhaust passageway disposed more upstream than said exhaust gas purifying means; a first exhaust passageway connected to said internal combustion engine and further to a first portion of said flow direction switching means: a second exhaust passageway communicating with the atmospheric air and further to a second port of said flow direction switching means; a third exhaust passageway connected to one side of said exhaust gas purifying means and further to a third port of said flow direction switching means; and a fourth exhaust passageway connected to the other side of said exhaust gas purifying means and further to a fourth port of said flow direction switching means, wherein said flow direction switching means can be switched over to a first position for permitting the exhaust gas to flow in a direction through said exhaust gas purifying means by connecting the first port to the third port and connecting the second port to the fourth port, and to a second position for permitting the exhaust gas to flow in a direction opposite to the first direction through said exhaust gas purifying means by connecting the first port to the fourth port and connecting the second port to the third port.

In patent application US2001013223A1 is disclosed an exhaust-gas cleaning system, comprising: at least one SOX trap; at least one NOX adsorption accumulator arranged in series with the at least one SOX trap in an exhaust system; and means for controlling the direction of exhaust gas flow so that it passes first through the SOX trap and then through the NOX adsorption accumulator or first through the NOX adsorption accumulator and then through the SOX trap. In this system the means for controlling the direction of the exhaust gas flow comprises a flap, a valve, or a slide.

In patent application DE10120592A1 is disclosed an exhaust gas purifier comprises a catalytic NOx occluding/reducing device arranged in the exhaust gas system of the engine; a feeding device for introducing a reducing substance; and an exchange device for exchanging the upstream and downstream sides of the catalytic NOx occluding/reducing device.

In patent publication US6148613A is disclosed a valve structure for a reversing flow catalytic converter for exhaust gases, the converter having a container which has a top end with a first port and a second port which are in fluid communication with each other so that the exhaust gases introduced into the first and second ports flows through a stationary catalytic material in the container, comprising: a valve housing including an intake cavity and an exhaust cavity, adapted to be mounted on the top end of the container, the intake cavity being adapted for connection of an exhaust gas pipe and the exhaust cavity being adapted for connection of a tail pipe; a valve component operably mounted in the valve housing for reversing gas flow through the stationary catalyst, the valve component being adapted to be moved between a first position in which the intake cavity communicates with the first port and the exhaust cavity communicates with the second port so that a gas flow passage is enabled through the stationary catalyst in a first direction, and a second position in which the intake cavity communicates with the second port and the exhaust cavity communicates with the first port so that a gas flow passage is enabled through the stationary catalyst in a second direction opposite the first direction.

In patent application publication WO 2006/053653 is disclosed an exhaust-gas turbocharger for an internal combustion engine, in which a bypass exhaust channel is provided as a U-shaped channel in the housing.

As catalyst devices of exhaust systems of turbocharged internal combustion engines devices based on different types of catalytic processes are used. Selective catalytic reduction (SCR) is a process of converting nitrogen oxides by means of a catalyst into diatomic nitrogen and water. In selective catalytic reduction systems into the flow of exhaust gas a reductant in form of a gas is added and adsorbed onto a catalyst. One of typical reductants is urea. Selective catalytic reduction systems are used for example in large utility boilers, industrial boilers, solid waste boilers and in engines of large ships, locomotives, gas turbines. SCR systems are becoming more common on ships as result of stringent emission regulations. Thus many types of engines are provided with catalyst devices, such as oxidation catalysts and/or catalytic converters for selective catalytic reduction (SCR) in order to meet the emission limits. In some operating conditions of engines, there might be a need to bypass a catalyst device. Engines therefore often comprise a bypass device for guiding exhaust gases past an oxidation catalyst or a catalytic converter for SCR. For turbocharged internal combustion engines ITSCR (Inter Turbines Selective Catalytic Reduction) is one of the most promising solutions to reduce nitrogen oxides in exhaust gas treatment, especially on two-stage turbocharged internal combustion engines.

In turbocharged internal combustion engines catalyst devices such as SCR devices, in particular ITSCR devises, are used off the engine, since an applicable solution for SCR integrated on the turbocharged internal combustion engine has proven to be difficult to find. When on the engine, for example ITSCR is positioned between the two turbocharging stages but, sometimes, it needs to be "disconnected", i.e. bypassed, in order to run the engine without this option. Problem in this respect is to have a good and efficient flow of exhaust gases with or without ITSCR working.

An object of the present invention is to provide a bypass device of an exhaust system of a turbocharged internal combustion engine and a system comprising a bypass device, in which the problems described above, in particular relating to bypassing are eliminated or at least minimized.

One particular object of the invention is to create a bypass device of an exhaust system of a turbocharged internal combustion engine and a system comprising a bypass device providing a good and efficient flow of exhaust gases with or without ITSCR working.

In order to achieve the above objects and those that will come apparent later the bypass device according to the invention is characterized by the features of the characterizing part of independent system claim. The system according to the invention in turn is characterized by the features of the characterizing part of the independent system claim. Advantageous embodiments and features are defined in dependent claims.

According to the invention the bypass device of an exhaust system of a turbocharged internal combustion engine comprises a housing with a first exhaust inlet and a first exhaust outlet and a second exhaust inlet and a second exhaust outlet, a cylindrical rotatable part formed with a first exhaust flow channel, a second exhaust flow channel and a bypass exhaust channel, wherein the first and second exhaust flow channels are formed in the cylindrical rotatable part to provide flow connection between the first exhaust inlet and a second exhaust outlet and between the second exhaust inlet and the first exhaust outlet by rotating the cylindrical rotatable part into a first position, and the bypass exhaust channel is formed in the cylindrical rotatable part as U-shaped to provide flow connection between the first exhaust inlet and the second exhaust outlet.

According to the invention the system comprises an internal combustion engine, a first turbocharger, a second turbocharger and a catalyst device between the first and the second turbocharger, wherein the bypass device is a bypass device according to the invention.

According to an advantageous feature the first exhaust inlet and a first exhaust outlet as well as the second exhaust inlet and the second exhaust outlet are located off-center in respect longitudinal axis of the cylindrical rotatable part. According to an advantageous feature the bypass device further comprises manual turning means or a driver to turn the cylindrical rotatable part in the housing.

According to an advantageous feature the rotatable part is rotatable between two positions; when in first position to guide the exhaust gas flow to a catalyst device and in second position to guide the exhaust gas flow to bypass the catalyst device.

According to an advantageous feature the rotatable part is rotatable to an incremental position between the first position and the second position, in which the exhaust gas flow is guided through the exhaust flow channels and through the bypass channel. This provides for the possibility of rotating the rotatable part, when the engine is running as such situation, when the exhaust gas flow would be completely prevented does not occur and also this provides for the possibility of dividing the exhaust gas flow and thus control the exhaust gas flow guided to the catalyst device.

According to an advantageous feature the cylindrical rotatable part has two longitudinal parts, advantageously two different longitudinal half-cylindrical parts divided in the longitudinal direction of the cylindrical form.

According to an advantageous feature the two exhaust flow channels, which are through flow lines, are located in the one of the longitudinal parts and the by-pass exhaust channel, which is the U-shaped flow line, is located in the other longitudinal part.

According to an advantageous aspect of the invention the bypass device comprises housing, rotatable part, advantageously a cylindrical rotatable part, for example a cartridge or a rotor, and manual turning means for the rotatable part or a driver, advantageously a motor. Function of the housing is to support the rotatable part and the driver and to form connecting means between turbochargers of the turbocharged internal combustion engine and the catalyst device. Function of the rotatable part is to deviate the exhaust gas flow efficiently. The rotatable part is shaped such that it has two longitudinal parts and in the one longitudinal part there are two exhaust flow channels, which are through flow lines and in the other longitudinal part there is a bypass exhaust channel, which is a U-shaped flow line. Advantageously the two longitudinal parts are constructed as two different half-cylindrical parts connected to each other in order to form the cylindrical rotatable part. Function of the manual turning means or the driver is to rotate the rotatable part between two positions so that: when in first position the exhaust gases flow from 1st stage turbochargers through connecting means of the housing and through one of the two exhaust flow channels i.e. the through flow lines in the rotatable part to the catalyst device and back to 2nd stage turbochargers through the other of the two through flow lines. When in second extreme position the exhaust gases flow from 1st stage turbocharges through connecting means of the housing and to the bypass exhaust channel i.e. to the U-shaped flow line in the rotatable part and out from the bypass exhaust channel i.e. U-shaped flow line to 2nd stage turbochargers skipping the catalyst device.

In the following the invention is described in more detail by reference to the accompanying drawing in which
in figures 1A - 1D is show schematically a simplified example of a rotatable part of a bypass device according to the invention,
in figures 2A - 2B is shown schematically an example of a bypass device according to the invention and
in figure 3 is shown schematically a simplified example of exhaust system with a bypass device.

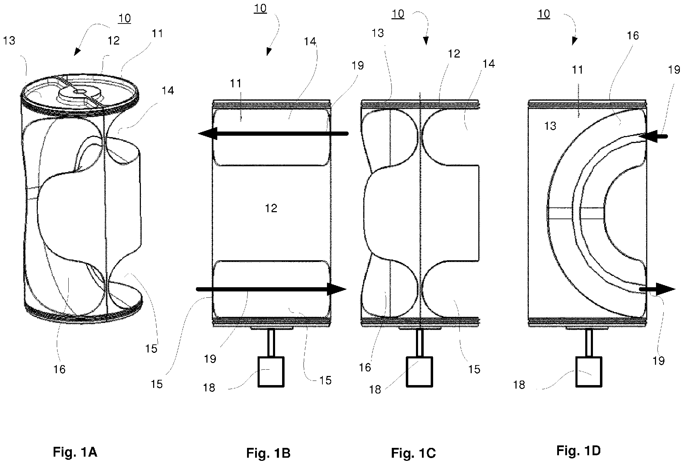

During the course of the following description and in the figures 1A - 3 corresponding reference numbers are used to identify like elements, parts and part components unless otherwise mentioned. It should be noted that in the figures some reference sigh might have been omitted for clarity reasons. In the following the examples are described mainly by reference to a bypass device of an exhaust system of a turbocharged internal combustion engine in view of simplifying the disclosure but it should be noted that instead of this example any type of a bypass device of an exhaust system of an engine, especially for a large ship or an off-shore rig or a power plant can have similar features and properties in accordance with the invention.

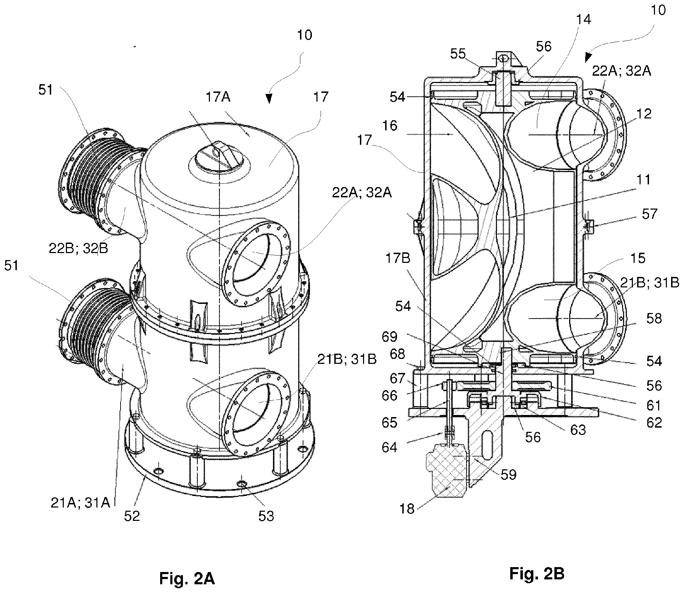

In figures 1A - 1D is shown a simplified example of a bypass device 10 according to the invention. In figure 1A is shown a rotatable part 11 of the bypass device 10 without its housing 17 (figs. 2A-2B). The rotatable part 11 is cylindrical and has two longitudinal parts 11, 12, which in this example are formed as two different longitudinal half-cylindrical parts 12, 13 divided by a plane in the longitudinal direction of the cylindrical form, one 12 of which longitudinal parts comprises two exhaust flow channel , which are through flow lines 14, 15 and for the gas flow 19 to be guided to the catalyst device, advantageously to ITSCR, and the other 13 of the longitudinal parts comprises a bypass exhaust channel i.e. U-shaped flow line 16, for the gas flow 19 (fig. 1D) to be directed back in the rotatable part 11 and for the catalyst device is to be bypassed. The rotatable part 11 has at least two positions in its rotatable direction; a first position for the exhaust gas flow via a catalyst device and a second position for the exhaust gas flow to skip the catalyst device. The angle between the two positions varies according to diameters of the exhaust flow channels 14, 15 and of the bypass flow channel from 40° to 50 °, advantageously from 43° to 47 °. The rotatable part 11 is rotatable also to an incremental position between the first position and the second position, in which the exhaust gas flow is guided through the exhaust flow channels 14, 15 and through the bypass channel 16. Thus the bypass device is utilizable in on-off modes and in an incremental mode. In the on-off modes the bypass device activates or deactivates, correspondingly, the catalyst device. In the incremental mode the bypass device can even tune the usage of the catalyst device.

The arrows in the figure 1B indicating the directions of gas flows 19 can also be vice versa in respect of the directions indicated by the arrows and thus the inlet and outlet directions of gas flow in and from the rotatable part can be vice versa. The two exhaust flow channels i.e. the two through flow lines 14, 15 are located in the one longitudinal part 12 and go through the half-cylindrical form substantially perpendicular to the longitudinal direction of the cylindrical form and have inlet and outlet openings in the side wall of the cylindrical form. The U-shaped flow line 16 is located in the other longitudinal part 13 and forms a curved line from one end of the longitudinal part in longitudinal direction inside the half-cylindrical form to the other end of the longitudinal direction and has an inlet opening and an outlet opening in the side wall of the cylindrical form.

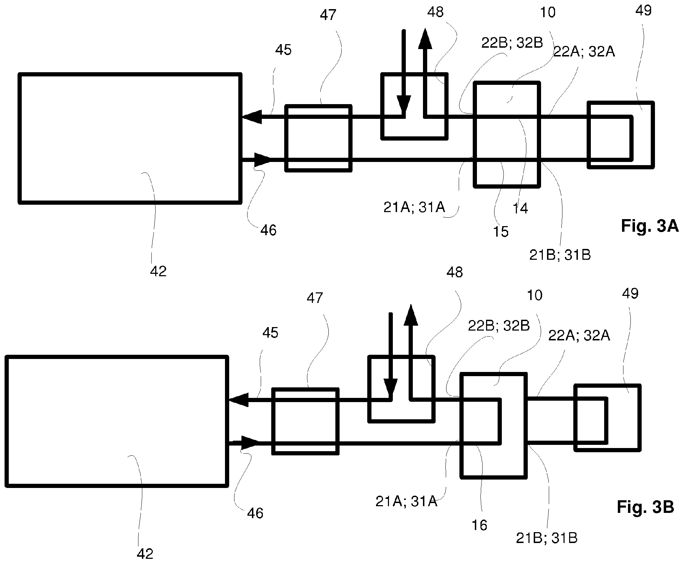

In figures 2A-2B is shown the bypass device 10 comprising the rotatable part 11 and the housing 17. The housing 17 comprises first and second exhaust inlets 31A, 32B and first and second exhaust outlets 31B, 32B i.e. inlet and outlet openings 31A, 3B, 32A, 32B for the exhaust gas flows 19 (figs. 1B, 1D, 3A-3B) that are locatable in the first position of the rotatable part 11 at corresponding exhaust inlets 21A, 22A and exhaust outlets 21B, 22B of the of the exhaust flow channels, i.e. the through flow lines 14, 15 of the bypass device 10 and in the second position of the rotatable part 11 at corresponding exhaust inlet 21A and exhaust outlet 22B of the bypass exhaust channel i.e. the U-shaped flow line 16 of the rotatable part 11; in the first position connecting the bypass device 10 to the catalyst device side and to turbocharger side and second position connecting the bypass device 10 to the turbocharger side and bypassing the catalyst device. In the bypass device 10, which comprises the housing 17, having an upper part 17A and a lower part 17B releasably connected to each other, the rotatable part 11, advantageously a cartridge or a rotor, and the driver 18, advantageously a motor. The housing 17 supports the rotatable part 11 and the driver 18 and comprises openings 31A, 31B, 32A, 32B for the inlets and outlets 21A, 21B, 22A, 22B of the flow lines 14, 15, 16 of the rotatable part 11. The rotatable part 11 is shaped such that it has two different longitudinal parts 12, 13 and on the one longitudinal part 12 there are the exhaust flow channels, i.e. the through flow lines 14, 15 and on the other longitudinal part 13 there is the by-pass exhaust channel i.e. U-shaped flow line 16. The driver 18 rotates the rotatable part 11 between two positions in the housing 17. When the rotatable part 11 is in its first position, the exhaust gases flow is from 1st stage turbochargers through the corresponding opening 31A of the housing 17 and through one 14 of the two through flow lines 14, 15 in the rotatable part 11 to the catalyst device through and back to 2nd stage turbochargers through the other 15 of the two through flow lines 14, 15. When in second position, the exhaust gases flow 19 is from 1st stage turbocharges through corresponding opening 31A of the housing 17 and through the U-shaped flow line 16 in the rotatable part 11 and to 2nd stage turbochargers and thus the catalyst device is omitted.

In the example figures 2A-2B is also shown some possibilities for the detailed parts and components of the bypass device 10. By reference numeral 51 is indicated bellows, by reference numeral 52 a mounting flange, by reference numeral 53 fixing holes, by reference numeral 54 sealing, by reference numeral 55 a pin, by reference numeral 56 bearing bushes, by reference numeral 57 a gasket, by reference numeral 58 a section for the connection of the rotatable part 11 connection, by reference numeral 59 fixing elements for the driver 18, by reference numeral 61 gear of the rotatable part 11, by reference numeral 62 a shield, by reference numeral 63 bearing, by reference numeral 64 coupling, by reference numeral 65 a driving shaft, by reference numeral 66 gear, by reference numeral 67 mounting base for the driver 18, by reference numeral 68 fixing elements and by reference numeral 69 a shaft for the rotatable part 11.

Figure 3 shows an exhaust system, which comprises a first turbocharger 47 and a second turbocharger 48. The first turbocharger 47 is connected in series with the second turbocharger 48. The exhaust system is also provided with a catalyst device 49, which is for example a SCR (selective catalytic reduction device) or advantageously an ITSCR (inter turbines selective catalytic reduction device). A turbine inlet of the first turbocharger 47 is connected to the exhaust manifold 46 of the engine 42, and the turbine outlet of the first turbocharger 47 is connected to the first inlet 21A; 31A of the bypass device 10. The first outlet 21B; 31B of the bypass device 10 is connected to the inlet of the catalyst device 49. The outlet of the catalyst device 49 is connected to the second inlet 22A; 32A of the bypass device 10, and the second outlet 22B; 32B of the bypass device 10 is connected to a turbine inlet of the second turbocharger 48. When the rotatable part 11 of the bypass device 10 is in the first position, as in figure 3A, exhaust gases can flow from the first turbocharger 47 to the first inlet 21A of the bypass device 10 and through the bypass device 10 via the exhaust flow channel 14 i.e. the through flow line 14 and from the first outlet 21B to the catalyst device 49. From the catalyst device 49, the exhaust gases flow through the second inlet 22A; 32A of the bypass device 10 and the exhaust flow channel 15, i.e. the through flow line 15 and from second outlet 22B; 32B to the second turbocharger 48. When there is a need to bypass the catalyst device 49, the rotatable part 11 of the bypass device 10 is rotated to the second position, as in figure 3B, and exhaust gases flow through the first inlet 22B; 32B of the bypass device 10 and the bypass exhaust channel i.e. the U-shaped flow line 16 to the second outlet 22B; 32B of the bypass device and to the second turbocharger 48 and thus flow of the exhaust gases to the catalyst device 49 is prevented.

Above only one advantageous examples of the invention has been described to which the invention is not to be narrowly limited. It is clear to one skilled in the art that many modifications and variations are possible with in the invention as defined in the following claims.

### Reference signs used in the drawing

10 bypass device
11 rotatable part
12 first longitudinal part
13 second longitudinal part
14 exhaust flow channel, or through flow line
15 exhaust flow channel, or through flow line
16 bypass exhaust channel, or U-shaped flow line
17 housing
18 driver
19 direction of gas flow
21A first inlet of the bypass device
21B first outlet of the bypass device
22A second inlet of the bypass device
22B second outlet of the bypass device
31A first inlet of the housing
31B first outlet of the housing
32A second inlet of the housing
32B second outlet of the housing
42 engine
46 exhaust manifold
47 first turbocharger
48 second turbocharger
49 catalyst device
51 bellows
52 mounting flange
53 fixing holes
54 sealing
55 pin
56 bearing bush
57 gasket
58 section for the connection of the rotatable part
59 fixing elements for the driver
61 gear of the rotatable part
62 shield
63 bearing
64 coupling
65 driving shaft
66 gear
67 mounting base for the driver
68 fixing element
69 shaft for the rotatable part

## Claims

1. Bypass device (10) of an exhaust system of a turbocharged internal combustion engine which bypass device (10) comprises
- a housing (17) with a first exhaust inlet (31A) and a first exhaust outlet (31B) and a second exhaust inlet (32A) and a second exhaust outlet (32B), **characterized in that** the bypass device (10) further comprises
- a cylindrical rotatable part (11) formed with a first exhaust flow channel (14), a second exhaust flow channel (15) and a bypass exhaust channel (16), wherein the first and second exhaust flow channels (14, 15) are formed in the cylindrical rotatable part (11) to provide flow connection between the first exhaust inlet (31A) and a first exhaust outlet (31B) and between the second exhaust inlet (32A) and the second exhaust outlet (32B) by rotating the cylindrical rotatable part (11) into a first position, and the bypass exhaust channel (16) is formed in the cylindrical rotatable part (11) as U-shaped to provide flow connection between the first exhaust inlet (31A) and the second exhaust outlet (32B).

2. Bypass device (10) according to claim 1, **characterized in that** the first exhaust inlet (31A) and a first exhaust outlet (31B) as well as the second exhaust inlet (32A) and the second exhaust outlet (32B) are located off-center in respect longitudinal axis of the cylindrical rotatable part (11).

3. Bypass device (10) according to claim 1 or 2, **characterized in that** the bypass device (10) further comprises manual turning means or a driver (18) to turn the cylindrical rotatable part (11) in the housing (17).

4. Bypass device (10) according to any of claims 1 - 3, **characterized in that** that the rotatable part (11) is rotatable between two positions; when in first position to guide the exhaust gas flow to a catalyst device and in second position to guide the exhaust gas flow to bypass the catalyst device.

5. Bypass device (10) according to any of claims 1 - 4, **characterized in that** the rotatable part (11) is rotatable to an incremental position between the first position and the second position, in which the exhaust gas flow is guided through the exhaust flow channels (14, 15) and through the bypass channel (16).

6. Bypass device (10) according to any of claims 1 - 5, **characterized in that** the cylindrical rotatable part (11) has two longitudinal parts (12, 13), advantageously two different longitudinal half-cylindrical parts (12, 13) divided in the longitudinal direction of the cylindrical form.

7. Bypass device (10) according to claim 6, **characterized in that** the two exhaust flow channels (14, 15), which are through flow lines (14, 15), are located in the one (12) of the longitudinal parts (12, 13) and the by-pass exhaust channel (16), which is the U-shaped flow line (16), is located in the other longitudinal part (13).

8. System comprising a bypass device (10), an internal combustion engine (42), a first turbocharger (47), a second turbocharger (48) and a catalyst device (49) between the first and the second turbocharger (47, 48), wherein the bypass device (10) is a bypass device (10) according to any of the previous claims.

## Patentansprüche

1. Umgehungsvorrichtung (10) einer Abgasanlage einer turbogeladenen Verbrennungskraftmaschine, wobei die Umgehungsvorrichtung (10) Folgendes umfasst:
- ein Gehäuse (17) mit einem ersten Abgaseinlass (31A) und einem ersten Abgasauslass (31B) und einem zweiten Abgaseinlass (32A) und einem zweiten Abgasauslass (32B), **dadurch gekennzeichnet, dass** die Umgehungsvorrichtung (10) ferner Folgendes umfasst:
- einen zylindrischen drehbaren Teil (11), der mit einem ersten Abgas-Durchflusskanal (14), einem zweiten Abgas-Durchflusskanal (15) und einem Umgehungsabgaskanal (16) geformt ist, wobei der erste und der zweite Abgas-Durchflusskanal (14, 15) in dem zylindrischen drehbaren Teil (11) geformt sind, um eine Durchflussverbindung zwischen dem ersten Abgaseinlass (31A) und einem ersten Abgasauslass (31B) und zwischen dem zweiten Abgaseinlass (32A) und dem zweiten Abgasauslass (32B) durch Drehen des zylindrischen drehbaren Teils (11) in eine erste Position bereitzustellen, und der Umgehungsabgaskanal (16) in dem zylindrischen drehbaren Teil (11) als U-förmig geformt ist, um eine Durchflussverbindung zwischen dem Abgaseinlass (31A) und dem zweiten Abgasauslass (32B) bereitzustellen.

2. Umgehungsvorrichtung (10) nach Anspruch 1, **dadurch gekennzeichnet, dass** der erste Abgaseinlass (31A) und ein erster Abgasauslass (31B) sowie der zweite Abgaseinlass (32A) und der zweite Abgasauslass (32B) außermittig in Bezug auf eine Längsachse des zylindrischen drehbaren Teils (11) angeordnet sind.

3. Umgehungsvorrichtung (10) nach Anspruch 1 oder 2, **dadurch gekennzeichnet, dass** die Umgehungsvorrichtung (10) ferner manuelle Drehmittel oder einen Antrieb (18) umfasst, um den zylindrischen drehbaren Teil (11) in dem Gehäuse (17) zu drehen.

4. Umgehungsvorrichtung (10) nach einem der Ansprüche 1 bis 3, **dadurch gekennzeichnet, dass** der drehbare Teil (11) zwischen zwei Positionen drehbar ist; wenn er sich in der ersten Position befindet, um den Abgasstrom zu einer Katalysatorvorrichtung zu leiten, und in der zweiten Position, um den Abgasstrom so zu leiten, dass er die Katalysatorvorrichtung umgeht.

5. Umgehungsvorrichtung (10) nach einem der Ansprüche 1 bis 4, **dadurch gekennzeichnet, dass** der drehbare Teil (11) zu einer inkrementellen Position zwischen der ersten Position und der zweiten Position drehbar ist, in welcher der Abgasstrom durch die Abgas-Durchflusskanäle (14, 15) und durch den Umgehungsabgaskanal (16) geleitet wird.

6. Umgehungsvorrichtung (10) nach einem der Ansprüche 1 bis 5, **dadurch gekennzeichnet, dass** der zylindrische drehbare Teil (11) zwei Längsteile (12, 13), vorteilhafterweise zwei unterschiedliche Längsteile (12, 13), hat, die in der Längsrichtung der zylindrischen Form geteilt sind.

7. Umgehungsvorrichtung (10) nach Anspruch 6, **dadurch gekennzeichnet, dass** die zwei Abgas-Durchflusskanäle (14, 15), die Durchflussleitungen (14, 15) sind, in dem einen (12) der Längsteile (12, 13) angeordnet sind und der Umgehungsabgaskanal (16), der die U-förmige Durchflussleitung (16) ist, in dem anderen Längsteil (13) angeordnet ist.

8. System, das eine Umgehungsvorrichtung (10), eine Verbrennungskraftmaschine (42), einen ersten Turbolader (47), einen zweiten Turbolader (48) und eine Katalysatorvorrichtung (49) zwischen dem ersten und dem zweiten Turbolader (47, 48) umfasst, wobei die Umgehungsvorrichtung (10) eine Umgehungsvorrichtung (10) nach einem der vorhergehenden Ansprüche ist.

## Revendications

1. Dispositif de dérivation (10) d'un système d'échappement d'un moteur à combustion interne turbocompressé, lequel dispositif de dérivation (10) comprend :
- un boîtier (17) avec une première entrée d'échappement (31A) et une première sortie d'échappement (31B) et une deuxième entrée d'échappement (32A) et une deuxième sortie d'échappement (32B), **caractérisé en ce que** le dispositif de dérivation (10) comprend en outre :
- une partie rotative cylindrique (11) formée avec un premier canal d'écoulement d'échappement (14), un deuxième canal d'écoulement d'échappement (15) et un canal d'échappement de dérivation (16), dans lequel les premier et deuxième canaux d'écoulement d'échappement (14, 15) sont formés dans la partie rotative cylindrique (11) pour fournir une connexion d'écoulement entre la première entrée d'échappement (31A) et une première sortie d'échappement (31B) et entre la deuxième entrée d'échappement (32A) et la deuxième sortie d'échappement (32B) par rotation de la partie rotative cylindrique (11) dans une première position, et le canal d'échappement de dérivation (16) est formé dans la partie rotative cylindrique (11) en forme de U pour fournir une connexion d'écoulement entre la première entrée d'échappement (31A) et la deuxième sortie d'échappement (32B).

2. Dispositif de dérivation (10) selon la revendication 1, **caractérisé en ce que** la première entrée d'échappement (31A) et une première sortie d'échappement (31B) ainsi que la deuxième entrée d'échappement (32A) et la deuxième sortie d'échappement (32B) sont situées de manière excentrée par rapport à un axe longitudinal de la partie rotative cylindrique (11).

3. Dispositif de dérivation (10) selon la revendication 1 ou 2, **caractérisé en ce que** le dispositif de dérivation (10) comprend en outre des moyens de rotation manuelle ou un dispositif d'entraînement (18) pour faire tourner la partie rotative cylindrique (11) dans le boîtier (17).

4. Dispositif de dérivation (10) selon l'une quelconque des revendications 1-3, **caractérisé en ce que** la partie rotative (11) est rotative entre deux positions ; lorsque dans la première position, pour guider l'écoulement de gaz d'échappement vers un dispositif catalyseur et dans la deuxième position, pour guider l'écoulement de gaz d'échappement pour contourner le dispositif catalyseur.

5. Dispositif de dérivation (10) selon l'une quelconque des revendications 1-4, **caractérisé en ce que** la partie rotative (11) est rotative vers une position incrémentielle entre la première position et la deuxième position, dans laquelle l'écoulement de gaz d'échappement est guidé à travers les canaux d'écoulement d'échappement (14, 15) et à travers le canal de dérivation (16).

6. Dispositif de dérivation (10) selon l'une quelconque des revendications 1-5, **caractérisé en ce que** la partie rotative cylindrique (11) a deux parties longitudinales (12, 13), avantageusement deux différentes parties semi-cylindriques longitudinales (12, 13) divisées dans le sens longitudinal de la forme cylindrique.

7. Dispositif de dérivation (10) selon la revendication 6, **caractérisé en ce que** les deux canaux d'écoulement d'échappement (14, 15), qui sont des lignes d'écoulement direct (14, 15), sont situés dans l'une (12) des parties longitudinales (12, 13), et que le canal d'échappement de dérivation (16), qui est la ligne d'écoulement en forme de U (16), est situé dans l'autre partie longitudinale (13).

8. Système comprenant un dispositif de dérivation (10), un moteur à combustion interne (42), un premier turbocompresseur (47), un deuxième turbocompresseur (48) et un dispositif catalyseur (49) entre le premier et le deuxième turbocompresseur (47, 48), dans lequel le dispositif de dérivation (10) est un dispositif de dérivation (10) selon l'une quelconque des revendications précédentes.
